Europäisches Patentamt

European Patent Office

Office européen des brevets

(19)

(11) Veröffentlichungsnummer: **0 247 306**
**B1**

(12) **EUROPÄISCHE PATENTSCHRIFT**

(45) Veröffentlichungstag der Patentschrift: **27.06.90**

(51) Int. Cl.⁵: **B 62 D 35/02**

(21) Anmeldenummer: **87103885.7**

(22) Anmeldetag: **17.03.87**

(54) **Kraftfahrzeug, insbesondere Personenwagen.**

(30) Priorität: **24.05.86 DE 3617538**

(43) Veröffentlichungstag der Anmeldung:
**02.12.87 Patentblatt 87/49**

(45) Bekanntmachung des Hinweises auf die
Patenterteilung:
**27.06.90 Patentblatt 90/26**

(84) Benannte Vertragsstaaten:
**DE FR GB IT**

(56) Entgegenhaltungen:
**EP-A-0 083 692**
**FR-A-1 405 928**
**FR-A-2 517 273**

**PATENT ABSTRACTS OF JAPAN, Seite 1772 M
78; JP-A-53 40 916 (MITSUBISHI JIDOSHA
KOGYO K.K.) 13-04-1978**

(73) Patentinhaber: **Dr.Ing.h.c. F. Porsche
Aktiengesellschaft
Porschestrasse 42
D-7000 Stuttgart 40 (DE)**

(72) Erfinder: **Kretschmer, Helmut, Dipl.-Ing. FH
Blumstrasse 41
D-8751 Bessenbach 2 (DE)**

**Beschreibung**

Die Erfindung betrifft ein Kraftfahrzeug, insbesondere einen Personenwagen, dessen benachbart der Fahrbahn verlaufende Unterseite zumindest bereichsweise eine aerodynamisch gestaltete Form besitzt und Radhäuser für Vorderräder und Hinterräder aufweist.

Bei einer bekannten Anordnung der eingangs genannten Gattung (DE-U1-80 23 035) ist die Unterseite des Kraftfahrzeuges glattflächig ausgebildet, wobei Aggregate und Fahrwerksteile wie Lenker, Achsen oder dergleichen abgedeckt sind. Durch die glattflächige Ausbildung der Unterseite wird der Luftwiderstandsbeiwert des Fahrzeuges reduziert. Nachteilig an dieser Anordnung ist jedoch, daß im Bereich der Unterseite des Fahrzeuges keine Vorkehrungen getroffen worden sind, um Abtrieb zu erzeugen.

Aufgabe der Erfindung ist es, an der Unterseite eines Kraftfahrzeuges solche Vorkehrungen zu treffen, daß bei guten Luftwiderstandsbeiwert ein das Fahrverhalten des Kraftfahrzeuges verbessernder Abtrieb erzeugt wird.

Erfindungsgemäß wird diese Aufgabe durch die kennzeichnenden Merkmale des Anspruchs 1 gelöst. Weitere, die Erfindung in vorteilhafter Weise ausgestaltende Merkmale beinhalten die Unteransprüche.

Die mit der Erfindung hauptsächlich erzielten Vorteile sind darin zu sehen, daß durch die Anordnung von Zuströmkanälen vor den Radhäusern mit konvex verlaufenden oberen Begrenzungsflächen Diffusorbereiche an der Unterseite geschaffen sind, die in Fahrzeuglängsrichtung gesehen, wenig Bauraum beanspruchen, so daß ein relativ großflächiger Bereich der Unterseite zur Abtriebserzeugung herangezogen werden kann.

Abtrieb wird also lediglich in den Bereichen vor den Zuströmkanalen erzeugt, da dort die Strömungsgeschwindigkeit erhöht ist, was eine Druckabsenkung (= Abtrieb) zur Folge hat. In den Radhäusern selbst wird kein Abtrieb erzeugt, sie dienen lediglich zur Abführung der Luft nach den Diffusorbereichen, wobei in den großvolumigen Radhäusern ein niedriges, die Luftabführung unterstützendes Druckniveau herrscht.

Durch die konvex zur Fahrbahn verlaufenden Formabschnitte der oberen Begrenzungsflächen liegt die Strömung unter Ausnutzung des Wandstrahleffektes ablösungsfrei an den oberen Begrenzungsflächen der Zuströmkanäle an. Die Zuströmkanäle können wahlweise vor den Vorderrädern oder den Hinterrädern oder aber auch vor den Vorder- und Hinterrädern angeordnet werden. Durch die zuletzt genannte Anordnung wird eine optimierte Abtriebswirkung erzielt, denn durch die Anbringung von Zuströmkanälen vor den Hinterrädern wird die Abtriebswirkung im Bereich der Vorderräder zusätzlich verbessert. Ferner kann der Luftstrom im Bereich der Radhäuser zur Bremsenkühlung herangezogen werden. Eine weitere Verbesserung der Abtriebswirkung wird durch die an die Radhäuser angeschlossenen Abströmkanäle erzielt.

Ein Ausführungsbeispiel der Erfindung ist in der Zeichnung dargestellt und wird im folgenden näher erläutert.

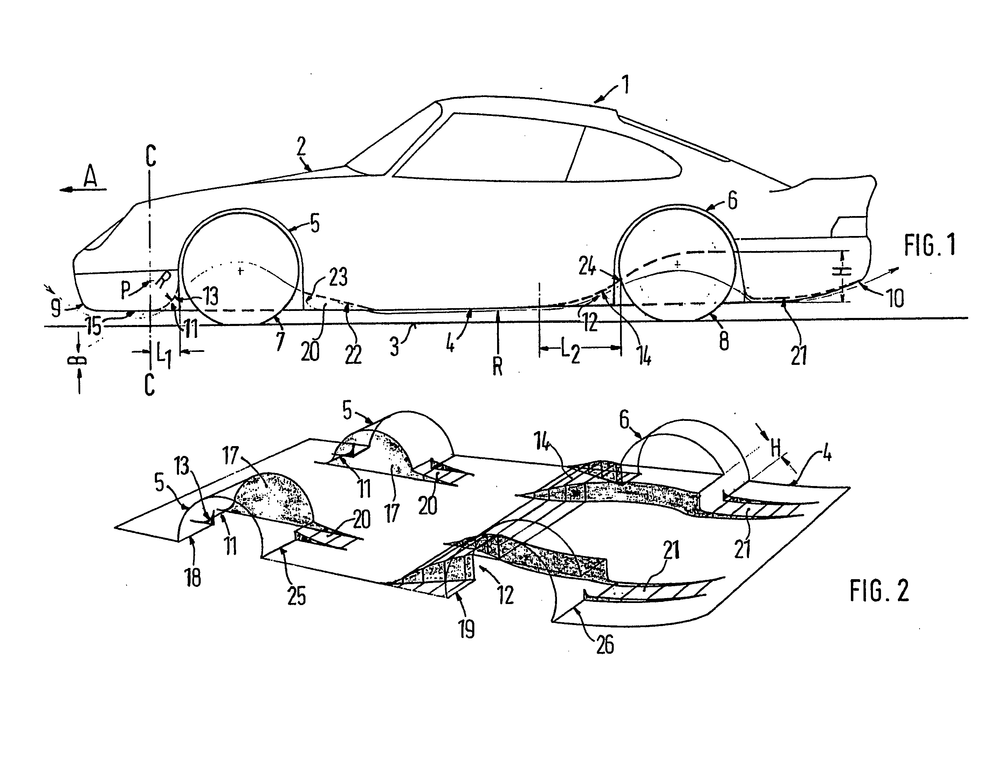

Es zeigt Fig. 1 eine Seitenansicht eines Personenwagens mit der erfindungsgemäßen Unterseite,

Fig. 2 eine perspektivische Ansicht von oben auf die Unterseite und die Radhäuser des Personenwagens,

Fig. 3 eine Ansicht in Pfeilrichtung R der Fig. 1 auf die Unterseite des Personenwagens in kleinerem Maßstab.

Der Personenwagen 1 umfaßt einen Aufbau 2, dessen benachbart einer Fahrbahn 3 verlaufende Unterseite 4 eine aerodynamisch gestaltete Form aufweist und mit Radhäusern 5, 6 für die Vorderräder 7 und die Hinterräder 8 versehen ist. Die glattflächig ausgebildete Unterseite 4, die sich zwischen einem strömungsgünstig gestalteten (gewölbten) Bug 9 und einem diffusorartigen Heckbereich 10 erstreckt, kann entweder durch ein Bodenblech des Aufbaus 2 oder ein zusätzlich auf das Bodenblech aufgesetztes Verkleidungsteil gebildet werden.

An der Unterseite 4 des Personenwagens 1 sind in Fahrtrichtung A gesehen, vor den Radhäusern 5, 6 der Vorder- und/oder Hinterräder 7, 8 hochgezogene, nach unten offene Zuströmkanäle 11, 12 vorgesehen, die in Fahrzeugquerrichtung gesehen, seitlich innenliegend neben den Rädern 7, 8 in die Radhäuser 5, 6 einmünden. Eine obere Begrenzungsfläche der Zuströmkanäle 11, 12 wird durch nach außen gerichtete konvexe Formabschnitte 13, 14 gebildet. Der konvexe Formabschnitt 13 des vorderen Zuströmkan als 11 ist radienförmig ausgebildet. Gemäß Fig. 1 bildet er einen Viertelkreis (90°). Es besteht aber auch die Möglichkeit, daß sich der radienförmige Formabschnitt 13 über einen Winkel kleiner als 90° erstreckt. Der radienförmige Formabschnitt 13 ist tangential an den vorgelagerten, glattflächigen Abschnitt 15 der Unterseite 4 angeschlossen. Der Radius R hängt von der Bodenfreiheit des Fahrzeuges ab und ist etwa gleich groß oder größer als der Abstand B zwischen der Unterseite 4 und der Fahrbahn 3 im Bereich einer vertikalen, den Einsatzpunkt P des Radius R schneidenden Hilfsebene C-C. Herkömmliche Fahrzeuge weisen einen Abstand B von etwa 50 bis 200 mm auf, wobei der zuerst genannte Wert lediglich für Rennfahrzeuge gilt, während Personenwagen einen größeren Abstand B aufweisen.

Die Zuströmkanäle 11 für die vorderen Radhäuser 5 können sich in Fahrzeugquerrichtung gesehen, über die gesamte Breite D zwischen einer Innenseite 16 des Rades 7 und einer Radhausinnenwand 17 erstrecken. Es besteht aber auch die Möglichkeit, daß die Zuströmkanäle 11 eine geringere Breite aufweisen.

Seitlich außenliegend neben den Zuströmkanälen 11, 12, also unmittelbar vor den Rädern 7, 8 sind zwischen der Unterseite 4 und den Radhäusern 5, 6 eckige Übergänge 18, 19 vorgesehen, wobei werkzeugbedingte Radien zulässig sind und noch als eckige Übergänge angesehen werden. Vor den Rädern 7, 8 können aber auch nicht näher dargestellte, nach unten gerichtete Verdrängungskörper angeordnet sein, die ein seitliches Umstromen der Räder 7, 8 bewirken.

Durch die hochgezogenen, konvexen Zuströmkanäle 11, 12 wird ein Diffusoreffekt erzeugt. Die Strömungsgeschwindigkeit der Luft wird im Bereich vor dem Diffusor erhöht, wodurch gleichzeitig eine Druckabsenkung stattfindet und somit eine Abtriebskraft in diesem Bereich erzeugt wird. Durch die konvex zur Fahrbahn verlaufenden Formabschnitte 13, 14 der oberen Begrenzungsflächen wird die Luft unter Ausnutzung des Wandstrahleffekts ablösefrei in die Radhäuser 5, 6 hochgeführt. Bei Bedarf kann die hochgeführte Luft auch zur Bremsenkühlung herangezogen werden.

Zur besseren Abführung bzw. Weiterführung der Luft aus den Radhäusern 5, 6 sind hinter den Rädern 7, 8 Abströmkanäle 20, 21 vorgesehen. Entsprechend Fig. 2 ist an das vordere Radhaus 5 ein Abströmkanal 20 angeschlossen, der in Verlängerung des Zuströmkanals 11 angeordnet ist. Der Abströmkanal 20 erstreckt sich lediglich über einen kurzen Teilbereich der Unterseite 4. Die obere Begrenzungsfläche 22 des Abströmkanals 20 ist geradlinig ausgebildet.

Der Abströmkanal 20 weist zumindest die Breite des Zuströmkanals 11 auf. Der Querschnitt des Abströmkanals 20 verkleinert sich entgegen der Fahrtrichtung A kontinuierlich und läuft in die glattflächige Kontur der Unterseite 4 ein.

Der Zuströmkanal 12 für das hintere Radhaus 6 erstreckt sich über eine Länge L2, die größer ist als die Länge L1 des Zuströmkanals 11 für das vordere Radhaus 5. Die obere Begrenzungsfläche 14 des hinteren Zuströmkanals 12 wird durch einen radien- oder kurvenförmigen Formabschnitt 14 gebildet, der ebenfalls leicht entgegen der Fahrtrichtung A ansteigt und eine flachere Krümmung aufweist als der radienförmige Formabschnitt 13 des vorderen Zuströmkanals 11. Die flachere Krümmung für den Formabschnitt 14 resultiert aus der niedrigeren Energie der Luft im hinteren Bereich der Unterseite 4. Der hintere Zuströmkanal 12 weist an seinem vorneliegenden Ende vorzugsweise eine größere Breite auf und verengt sich dann bis zum Radhaus 6 hin. Gleichzeitig nimmt die Höhe des Zuströmkanals 12 entgegen der Fahrtrichtung A zu. Der Zuströmkanal 12 erstreckt sich in Fahrzeuglängsrichtung gesehen, vor dem Radhaus 6 und endet etwa im Bereich des theoretischen Schnittpunktes 24 zwischen dem Formabschnitt 14 und dem Rad 8. Es besteht aber auch die Möglichkeit, daß der Zuströmkanal 12 weiter hinten angeordnet ist.

Bei geringem Unterdruck im Bereich des hinteren Radhauses 6 kann dieses über seine gesamte Quererstreckung einen gleichbleibenden Querschnitt bzw. eine gleichbleibende Höhe aufweisen (wie am vorderen Radhaus 5 dargestellt).

Herrschen jedoch wegen weit nach außen ausgestellter Kotflügel hohe Unterdrücke im Bereich des hinteren Radhauses 6, ist es vorteilhaft, wenn das hintere Radhaus 6 seitlich neben dem Rad 8 eine geringere Höhe H aufweist als im Bereich des Rades 8. Durch diese Maßnahme wird erreicht, daß die in das Radhaus 6 hochsteigende Luft nicht seitlich aus dem Radhaus 6 abströmt, sondern nach hinten hin über die Abströmkanäle 21 entweicht. Die Höhe H wird für jedes Fahrzeug empirisch ermittelt.

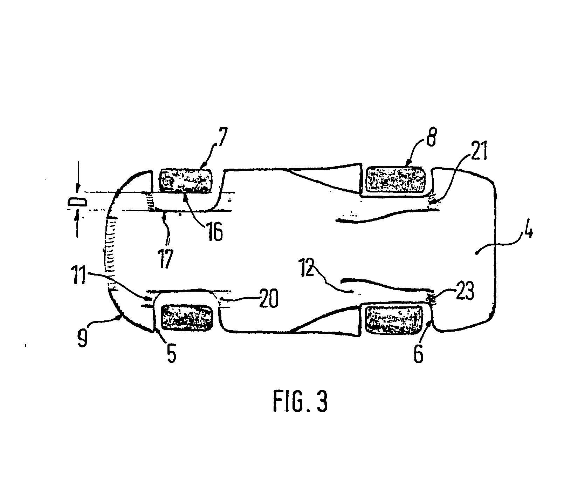

Der an das hintere Radhaus 6 hinter dem Rad 8 angeschlossene Abströmkanal 21 erstreckt sich entsprechend den Fig. 1 und 2 annähernd bis zum hinteren Ende der Unterseite 4. Es besteht aber auch die Möglichkeit, daß die Abströmkanäle 20, 21 lediglich durch einen kurzen konvexen Übergang 23 zwischen den Radhäusern 5, 6 und angrenzenden Abschnitten der Unterseite 4 gebildet werden. Der Übergang 23 ist vorzugsweise als Radius ausgebildet, wobei die Größe des Radius so gewählt ist, daß eine ablösungsfreie Strömung der Luft gewährleistet ist. In Fig. 1 ist der Übergang 23 beim vorderen Abströmkanal 20 strichpunktiert dargestellt. Ferner sind die Abströmkanäle 21 in Fig. 3 als konvexe Übergänge 23 ausgebildet, d. h., die Abströmkanäle 21 enden kurz hinter den Radhäusern 6.

Die seitlich neben den Abströmkanälen 20, 21, also unmittelbar vor den Rädern 7, 8 liegenden Übergänge 25, 26 zwischen den Radhäusern 5, 6 und der Unterseite 4 sind eckig ausgebildet, wobei auch hier werkzeugbedingte Radien zulässig sind.

Der Verlauf der unter dem Personenwagen 1 zwischen Unterseite 4 und Fahrbahn 3 hindurchfließenden Strömung ist in Fig. 1 dargestellt.

**Patentansprüche**

1. Kraftfahrzeug, insbesondere Personenwagen, dessen benachbart der Fahrbahn (3) verlaufende Unterseite (4) zumindest bereichsweise eine aerodynamisch gestaltete Form besitzt und Radhäuser (5, 6) für Vorderräder (7) und Hinterräder (8) aufweist, dadurch gekennzeichnet, daß an der Unterseite (4) des Kraftfahrzeuges (1) - in Fahrtrichtung A gesehen - vor den Radhäusern (5, 6) der Vorder und/oder Hinterräder (7, 8) hochgezogene, nach unten hin offene Zuströmkanäle (11, 12) zu den Radhäusern (5, 6) vorgesehen sind, die - in Fahrzeugquerrichtung gesehen - seitlich innenliegend neben den Rädern (7, 8) in die Radhäuser (5, 6) einmünden, d.h., zwischen der Innenseite (16) der Räder (7 bzw. 8) und der entsprechenden Radhausinnenwand (17), und daß obere Begrenzungsflächen der Zuströmkanäle (11, 12) durch konvex verlaufende Formabschnitte (13, 14) gebildet werden.

2. Kraftfahrzeug nach Anspruch 1, dadurch gekennzeichnet, daß der Formabschnitt (13) des Zuströmkanals (11) radienförmig ausgebildet ist.

3. Kraftfahrzeug nach Anspruch 2, dadurch gekennzeichnet, daß der radienförmige Formabschnitt (13) tangential an den vorgelagerten, glattflächigen Abschnitt (15) der Unterseite (4) angeschlossen ist.

4. Kraftfahrzeug nach den Ansprüchen 2 und 3, dadurch gekennzeichnet, daß der Radius (R) des Formabschnittes (13) etwa gleich groß oder größer ist als der Abstand (B) zwischen der Unterseite (4) und der Fahrbahn (3) im Bereich einer vertikalen, den Einsatzpunkt (P) des Radius schneidenden Hilfsebene (C-C).

5. Kraftfahrzeug nach Anspruch 1, dadurch gekennzeichnet, daß sich der Zuströmkanal (11) für das vordere Radhaus (5) zumindest über einen Teilbereich der Breite (D) zwischen der Innenseite (16) des Rades (7) und der Radhausinnenwand (17) erstreckt.

6. Kraftfahrzeug nach Anspruch 1, dadurch gekennzeichnet, daß in Fahrtrichtung (A) gesehen, unmittelbar vor den Rädern (7, 8) ein eckiger Übergang (18, 19) zwischen der Unterseite (4) und dem Radhaus (5, 6) vorgesehen ist.

7. Kraftfahrzeug nach Anspruch 2, dadurch gekennzeichnet, daß das vordere Radhaus (5) hinter dem Rad (7) mit einem Abströmkanal (20) versehen ist.

8. Kraftfahrzeug nach Anspruch 7, dadurch gekennzeichnet, daß sich der Abströmkanal (20) lediglich über einen Teilbereich der Unterseite (4) erstreckt.

9. Kraftfahrzeug nach Anspruch 7, dadurch gekennzeichnet, daß der Abströmkanal (20) durch eine nach oben hin gerichtete Eindrückung der Unterseite (4) gebildet wird.

10. Kraftfahrzeug nach Anspruch 7, dadurch gekennzeichnet, daß der Abströmkanal (20) zumindest die Breite des Zuströmkanals (11) aufweist und eine Verlängerung des Zuströmkanals (11) bildet.

11. Kraftfahrzeug nach Anspruch 7, dadurch gekennzeichnet, daß sich der Querschnitt des Abströmkanals (20) entgegen der Fahrtrichtung (A) kontinuierlich verkleinert.

12. Kraftfahrzeug nach Anspruch 7, dadurch gekennzeichnet, daß die Abströmkanäle (20, 21) durch einen konvexen Übergang (23) zwischen dem Radhaus (5, 6) und einem angrenzenden Abschnitt der Unterseite (4) gebildet werden.

13. Kraftfahrzeug nach Anspruch 1, dadurch gekennzeichnet, daß sich der Zuströmkanal (12) für das hintere Radhaus (6) über eine Länge (L2) erstreckt, die größer ist als die Länge (L1) des Zuströmkanals (11) für das vordere Radhaus (5).

14. Kraftfahrzeug nach Anspruch 13, dadurch gekennzeichnet, daß die obere Begrenzungsfläche des hinteren Zuströmkanals (12) durch einen radien- oder kurvenförmigen Formabschnitt (14) gebildet wird, wobei dieser Formabschnitt (14) mit einer flacheren Krümmung versehen ist als der Formabschnitt (13) des vorderen Zuströmkanals (11).

15. Kraftfahrzeug nach Anspruch 13, dadurch gekennzeichnet, daß sich die Breite des Zuströmkanals (12) zum Radhaus (6) hin verkleinert.

16. Kraftfahrzeug nach Anspruch 1, dadurch gekennzeichnet, daß das hintere Radhaus (6) hinter dem Rad (8) mit einem Abströmkanal (21) versehen ist.

17. Kraftfahrzeug nach Anspruch 13, dadurch gekennzeichnet, daß der Zuströmkanal (12) in einem vorneliegenden Bereich des hinteren Radhauses (6) endet.

18. Kraftfahrzeug nach Anspruch 1, dadurch gekennzeichnet, daß das hintere Radhaus (6) seitlich neben dem Rad (8) eine geringere Höhe (H) aufweist als im Bereich des Rades (8).

**Revendications**

1. Véhicule automobile, en particulier voiture de tourisme, dont la partie inférieure (4), s'étendant à proximité de la chaussée (3), présente une forme aérodynamique, au moins dans certaines zones, ainsi que des logements de roue (5, 6) pour les roues avant (7) et roues arrière (8), caractérisé en ce qu'on prévoit sur la face inférieure (4) du véhicule automobile (1) - vu dans le sens de la marche A - devant les logements de roue (5, 6) des roues avant et/ou des roues arrière (7, 8), des canaux d'arrivée (11, 12) relevés, ouverts vers le bas, menant aux logements de roue (5, 6) qui - vus dans le sens transversal au véhicule - débouchent latéralement à l'intérieur, à côté des roues (7, 8) dans les logements de roue (5, 6), c'est-à-dire entre la face intérieure des roues (7 ou 8) et la paroi intérieure (17) correspondante du logement de roue, et en ce que des portions profilées (13, 14) convexes forment des surfaces supérieures de délimitation des canaux d'arrivée (11, 12).

2. Véhicule automobile selon la revendication 1, caractérisé en ce que la portion profilée (13) du canal d'arrivée (11) est en forme de rayon.

3. Véhicule automobile selon la revendication 2, caractérisé en ce que la portion profilée (13) en forme de rayon se raccorde tangentiellement à la portion (15) de surface lisse, située devant, de la face inférieure (4).

4. Véhicule automobile selon les revendications 2 et 3, caractérisé en ce que le rayon (R) de la portion profilée (13) est à peu près égal ou supérieur à la distance (B) séparant la face inférieure (4) de la chaussée (3), dans la région d'un plan auxiliaire (C-C) vertical, coupant le point d'application (P) du rayon.

5. Véhicule automobile selon la revendication 1, caractérisé en ce que le canal d'arrivée (11) du logement de roue (5) avant s'étend au moins sur une zone partielle de la largeur (D), entre la face intérieure (16) de la roue (7) et la paroi intérieure (17) du logement de roue.

6. Véhicule automobile selon la revendication 1, caractérisé en ce qu'on prévoit une transition (18, 9) angulaire entre la face inférieure (4) et le logement de roue (5, 6), directement devant les roues (7, 8), vues dans le sens de la marche (A).

7. Véhicule automobile selon la revendication 2, caractérisé en ce que le logement de roue (5) avant est pourvu d'un canal de sortie (20), derrière la roue (7).

8. Véhicule automobile selon la revendication 7, caractérisé en ce que le canal de sortie (20) s'étend uniquement sur une zone partielle de la face inférieure (4).

9. Véhicule automobile selon la revendication 7, caractérisé en ce que le canal de sortie (20) est formé par un enfoncement, dirigé vers le haut, de la face inférieure (4).

10. Véhicule automobile selon la revendication 7, caractérisé en ce que le canal de sortie (20) présente au moins la largeur du canal d'arrivée (11) et forme un prolongement du canal d'arrivée (11).

11. Véhicule automobile selon la revendication 7, caractérisé en ce que la section transversale du canal de sortie (20) se réduit en continu dans le sens contraire au sens de la marche (A).

12. Véhicule automobile selon la revendication 7, caractérisé en ce que les canaux de sortie (20, 21) sont formés par une transition (23) convexe, entre le logement de roue (5, 6) et une portion adjacente de la face inférieure (4).

13. Véhicule automobile selon la revendication 1, caractérisé en ce que le canal d'arrivée (12) du logement de roue (6) arrière s'étend sur une longueur (L2) qui est supérieure à la longueur (L1) du canal d'arrivée (11) du logement de roue (5) avant.

14. Véhicule automobile selon la revendication 13, caractérisé en ce que la face de délimitation supérieure du canal d'arrivée (12) arrière est formée par une portion profilée (14) en forme de rayon ou de courbe, cette portion profilée (14) étant pourvue d'une courbure plus plate que la portion profilée (13) du canal d'arrivée (11) avant.

15. Véhicule automobile selon la revendication 13, caractérisé en ce que la largeur du canal d'arrivée (12) diminue vers le logement de roue (6).

16. Véhicule automobile selon la revendication 1, caractérisé en ce que le logement de roue (6) arrière est pourvu d'un canal de sortie (21), derrière la roue (8).

17. Véhicule automobile selon la revendication 13, caractérisé en ce que le canal d'arrivée (12) se termine dans une zone située à l'avant du logement de roue arrière (6).

18. Véhicule automobile selon la revendication 1, caractérisé en ce que le logement de roue (6) arrière présente, latéralement, à côté de la roue (8), une hauteur (H) inférieure à celle de la région de la roue (8).

**Claims**

1. A motor vehicle, in particular a passenger car, whose underside (4) extending adjacent to the roadway (3) has at least in part a streamlined shape and comprises arches (5, 6) for the front wheels (7) and rear wheels (8), characterized in that raised inflow ducts (11, 12) — open at the bottom — towards the wheel arches (5, 6) are provided on the underside (4) of the motor vehicle (1) in front of the arches (5, 6) of the front and/or rear wheels (7, 8) as viewed in the direction of travel A, the inflow ducts (11, 12) opening into the wheel arches (5, 6) laterally on the inside — as viewed in the transverse direction of the vehicle — adjacent to the wheels (7, 8), i.e. between the inside (16) of the wheels (7 and 8 respectively) and the corresponding inner wall (17) of the wheel arch, and upper boundary faces of the inflow ducts (11, 12) are formed by shaped sections (13, 14) extending in a convex manner.

2. A motor vehicle according to Claim 1, characterized in that the shaped section (13) of the inflow duct (11) is radially shaped.

3. A motor vehicle according to Claim 2, characterized in that the radially shaped section (13) is attached tangentially to the smooth-faced portion (15) of the underside (4) mounted in front.

4. A motor vehicle according to Claims 2 and 3, characterized in that the radius (R) of the shaped section (13) is approximately the same size as or larger than the distance (B) between the underside (4) and the roadway (3) in the region of a vertical auxiliary plane (C—C) intersecting the centre point (P) of the radius.

5. A motor vehicle according to Claim 1, characterized in that the inflow duct (11) for the front wheel arch (5) extends at least over a partial area of the width (D) between the inside (16) of the wheel (7) and the inner wall (17) of the wheel arch.

6. A motor vehicle according to Claim 1, characterized in that an angular transition (18, 19) is provided between the underside (4) and the wheel arch (5, 6) directly in front of the wheels (7, 8) as viewed in the direction of travel (A).

7. A motor vehicle according to Claim 2, characterized in that the front wheel arch (5) is provided with an outflow duct (20) behind the wheel (7).

8. A motor vehicle according to Claim 7, characterized in that the outflow duct (20) extends only over a partial area of the underside (4).

9. A motor vehicle according to Claim 7, characterized in that the outflow duct (20) is formed by an upwardly directed depression in the underside (4).

10. A motor vehicle according to Claim 7, characterized in that the outflow duct (20) has at least the width of the inflow duct (11) and forms an extension of the inflow duct (11).

11. A motor vehicle according to Claim 7, characterized in that the cross-section of the outflow duct (20) decreases continuously opposite to the direction of travel (A).

12. A motor vehicle according to Claim 7, characterized in that the outflow ducts (20, 21) are formed by a convex transition (23) between the wheel arch (5, 6) and an adjacent portion of the underside (4).

13. A motor vehicle according to Claim 1, characterized in that thee inflow duct (12) for the rear wheel arch (6) extends over a length (L2) which is greater than the length (L1) of the inflow duct (11) for the front wheel arch (5).

14. A motor vehicle according to Claim 13, characterized in that the upper boundary face of the rear inflow duct (12) is formed by a radially shaped or curved shaped portion (14), this shaped portion (14) having a flatter curvature than the shaped portion (13) of the front inflow duct (11).

15. A motor vehicle according to Claim 13, characterized in that the width of the inflow duct (12) decreases towards the wheel arch (6).

16. A motor vehicle according to Claim 1, characterized in that the rear wheel arch (6) is provided with a outflow duct (21) behind the wheel (8).

17. A motor vehicle according to Claim 13, characterized in that the inflow duct (12) terminates in a region of the rear wheel arch (6) lying towards the front.

18. A motor vehicle according to Claim 1, characterized in that the rear wheel arch (6) has a lower height (H) laterally adjacent to the wheel (8) than in the region of the wheel (8).

FIG. 1

FIG. 2

FIG. 3